# EUROPEAN PATENT SPECIFICATION

(11) **EP 4 610 009 B1**
(45) Date of publication and mention of the grant of the patent: **18.11.2026**
(21) Application number: 24160125.1
(22) Date of filing: 28.02.2024
(51) Int. Cl.: B27M 1/08, B27M 3/00

(54) **TEAK PLANK AND METHOD OF MAKING SAME**
TEAKHOLZPLATTE UND VERFAHREN ZU DEREN HERSTELLUNG
PLANCHE EN BOIS DE TECK ET SON PROCÉDÉ DE FABRICATION

(43) Date of publication of application: 03.09.2025
(73) Proprietor: Plantera Co., Ltd, Bang Pa-In, Ayutthaya 13160 (TH)
(72) Inventor: SUPAKRIT, Vayakornvichitr, Ratchakram, Bangsa 13290 (TH)
(74) Representative: Kaya, Erdem

(56) References cited:
- US-A- 5 034 259

## Description

### Technical field

The present invention generally relates to a method of making a teak plank and the teak plank obtained from the method.

### Background

Teakwood is a dense, close-grained hardwood sourced from the *Tectona grandis* tree, native to South and Southeast Asia. Teakwood is originally golden in color and has a smooth grain and texture. Natural antimicrobial and insecticide substances of teakwood cause excellent natural anti-rot and weathering resistance, even if left untreated. This precious wood is suitable in shipbuilding: the nautical sector uses teak to build manufactured teak decks to join on yachts and sailing, thanks to teakwood's superior durability.

Natural teak forests occur only in four countries of the world: India, Lao PDR, Myanmar, and Thailand. Myanmar is the only country supplying teak from natural forests to the international market. Global teak supply from natural and planted teak forests contributes 2 to 2.5 million m³, roughly 2% of the total tropical round wood production. The supply of teak from natural forests is declining at an alarming rate of about 1.3% globally and the planted teak shows an increasing trend from 1.3 to 5.7 million ha between 1995-2010 (Kollert and Cherubini, 2012).

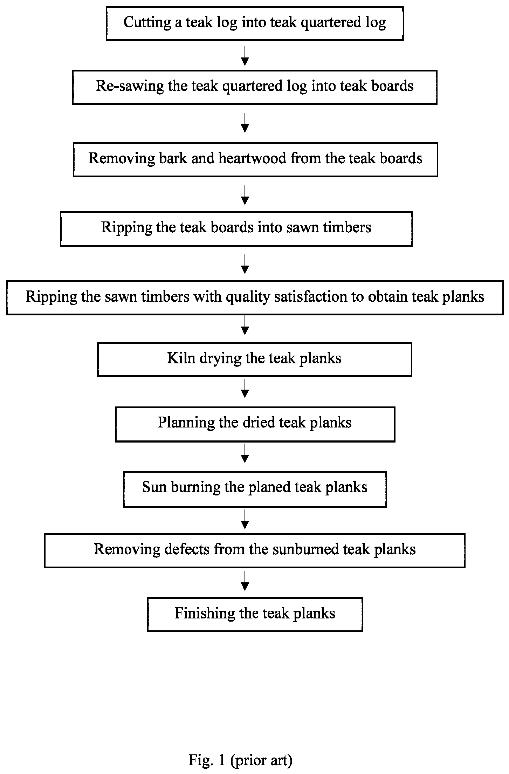

Production of high-quality teakwood in relatively long rotations of 50-70 years has been the traditional practice ever since the first world teak plantation was established in India (Nilambur-Kerala) in the 1840s. The traditional method of producing teak plank in nautical sector consists of several steps including (i) cutting a teak log into teak quartered log; (ii) re-sawing the teak quartered log into teak boards; (iii) removing bark and heartwood from the teak boards; (iv) ripping the teak boards into sawn timbers; (v) ripping the sawn timbers with quality satisfaction to obtain teak planks in size required for the production of final product; (vi) kiln drying the teak planks; (vii) planning the dried teak planks to remove the irregularities on the outside of the teak planks; (viii) sun burning the planed teak planks to mature their color; (ix) removing defects from the sunburned teak planks; (x) finishing the teak planks by a variety of ways known in the related art to receive the final teak planks with desired characteristics. (See Fig. 1).

Due to the diminishing supply of matured natural teak, new and alternative methods are being explored to rely less on natural teak.

US20070292656A1 discloses a composite board comprising a first layer having an orientation and a second layer bonded to the first layer where the second layer comprises a plurality of wooden veneer structures, each wooden veneer structure is substantially perpendicular to the orientation of the first layer. It also discloses a method of making a composite board comprising of providing a first layer having an orientation; assembling a second layer by arranging a plurality of wooden veneer structures so that each wooden veneer structure is substantially perpendicular to the orientation of the first layer; and bonding the first layer to a first surface of the second layer.

CN 100344425C discloses a technology for producing floor board with plywood made of medium- or small-diameter includes such steps as spinning cutting to obtain ply, drying, removing excessive edges, milling edge to form bevel edge, longitudinal splicing, abrading, coating resin, laminating, pre-pressing, hot pressing, longitudinal sawing to become strips, planning, lateral splicing, planning, making tenon and slot mortise, painting and polishing. US 5 0 3 4 259 A discloses the preamble of claim 1.

Due to the dwindling supply of teak from natural forests, teak logs from shorter rotations of 20-30 years appear promising and are being practiced for veneer and saw log production for relatively quick returns. Wood from short-rotation teak plantations generally has a lower price in the timber market because the wood is considered inferior in its quality due to attributes such as shorter length, smaller width, less durability and in general more defective i.e., cracks, knots, insect defects, spalting.

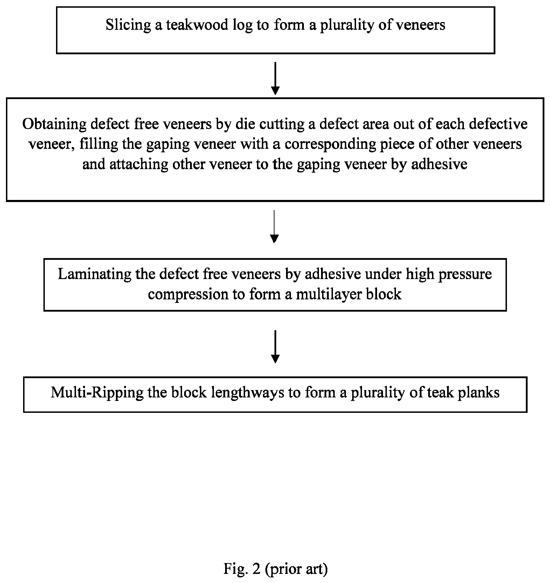

Thai Petty Patent No. 14937 discloses a method for producing teak plank from planted teakwood comprising steps of: (i) slicing a teakwood log to form a plurality of veneers 1-2 mm thick; (ii) obtaining defect-free veneers by die cutting a defect area out of each defective veneer, filling the gaping veneer with a corresponding piece of other veneers and attaching another veneer to the gaping veneer by adhesive; (iii) laminating the defect-free veneers by adhesive under highpressure compression to form a multilayer block; and (iv) multi-ripping the block lengthways to form a plurality of teak planks (see Fig. 2)

### Summary of the Invention

It is an object of the invention to obtain teak plank with a straight grain pattern from a method with fewer steps, lowered cost, higher yield, utilizing smaller logs and thus overall, a "greener" and more sustainable compared with the prior methods of making the teak plank.

One embodiment of the invention well suited for achieving the object is a method according to claim 1.

Another embodiment is the teak plank obtained from the aforesaid method of making teak plank with the straight grain pattern and the transverse coefficients of thermal expansion (CTE) less than 50 x 10⁻⁶/degree Celsius. The teak plank of the present invention is well suited for decking on luxury vessels e.g. super yachts, making furniture and other decorations. In general woodworking terms, straight grained pattern is the most durable and has the highest resistance to bending due to its natural dense fiber.

The method of the present invention has advantages over the method of the prior arts. One of the main advantages is that the method of the present invention can produce longer lengths of teak plank since the method uses finger jointing. Length is considered important in teak plank manufacture since natural, defect-free and long length teakwood is becoming scarce. The method of the present invention can also reduce waste (higher yield).

Furthermore, the method of the present invention provides teak planks with a more aesthetically pleasing "look". In terms of relativity, the teak plank obtained from the method of the present invention is more similar to natural teakwood since the method can produce a thinner veneer which in turn will make the "lines" made from layers of the strips less visible.

### Brief description of the drawings

Fig. 1 illustrates a flow chart for the traditional method of teak plank manufacture;
Fig. 2 illustrates a flow chart for the method of teak plank manufacture disclosed in the Thai Petty Patent No. 14937;
Fig. 3 illustrates a teak scantling with and without defects made by planning a sawn timber;
Fig. 4 illustrates a finger-jointed teak scantling and a lengthen strip made by gluing the finger-jointed teak scantlings together;
Fig. 5 illustrates a monolayer strip block made by laminating the lengthen strips laterally;
Fig. 6 illustrates a multilayer strip block made by laminating the monolayer strip blocks vertically;
Fig. 7 illustrates a monolayer veneer made by slicing a top or bottom surface of the multilayer strip block;
Fig. 8 illustrates a multilayer veneer block made by laminating the monolayer veneers vertically;
Fig. 9 illustrates the multilayer veneer block with ripping marks (A-A);
Fig. 10 illustrates a teak plank with straight grain pattern made by ripping the multilayer veneer block along the ripping mark (A-A);
Fig. 11 illustrates a flow chart for a method of making a teak plank according to one specific embodiment of the present invention.

### Detailed Description

The present invention is best understood by reference to the detailed figures and description set forth herein. Embodiments of the invention are discussed below with reference to the Figures. However, those skilled in the art will readily appreciate that the detailed description given herein with respect to these figures is for explanatory purposes as the invention extends beyond these limited embodiments. The invention is defined by the appended claims.

It is also to be understood that the terminology used herein is used for the purpose of describing particular embodiments only, and is not intended to limit the scope of the present invention. It must be noted that as used herein and in the appended claims, the singular forms "a," "an," and "the" include the plural reference unless the context clearly dictates otherwise. Thus, for example, a reference to "a mean" is a reference to one or more means and may include subservient means. All conjunctions used are to be understood in the most inclusive sense possible. Thus, the word "or" should be understood as having the definition of a logical "or" rather than that of a logical "exclusive or" unless the context clearly necessitates otherwise. Structures described herein are to be understood also to refer to functional equivalents of such structures.

With respect to the terms "comprising," "consisting of," and "consisting essentially of," where one of these three terms is used herein, the presently disclosed and claimed subject matter may include the use of either of the other two terms. Thus in some embodiments not otherwise explicitly recited, any instance of "comprising" may be replaced by "consisting of" or, alternatively, by "consisting essentially of."

The teak plank of the present invention varies in dimension. It is suitable for decking luxury vessels e.g. yachts and making furniture.

A method of making a teak plank 60 in accordance with one embodiment of the present invention is described in more detail hereafter. The method comprises steps:
a. preparing a teak scantling 10 by planning a sawn timber;
b. removing a defect 12 from the teak scantling 10;
c. assembling the teak scantlings 10 without defect by means of finger joint and gluing the finger-jointed teak scantlings 20 together by an adhesive to form a lengthen strip 30;
d. laminating the lengthen strips 3 laterally to form a monolayer strip block 40;
e. laminating the monolayer strip blocks 40 vertically to form a multilayer strip block 50;
f. boiling/steaming the multilayer strip block 50 to be soften;
g. slicing a top or bottom surface of the multilayer strip block 50 to form a monolayer veneers 60;
h. laminating the monolayer veneers 60 vertically under pressure to form a multilayer veneer block; and
i. ripping the multilayer veneer block lengthwise to form a teak plank 70.

As used herein, the term "planning" or "to plane" mean to flatten, to reduce the thickness of, to remove a thin layer from the surface of timber and to impart a smooth surface to a rough piece of timber by plane, a tool for shaping wood.

The sawn timber used for making of the teak scantling 10 is small sawn timber with a length of not less than 300 mm, a thickness of 25-130 mm, and a width of 25-130 mm.

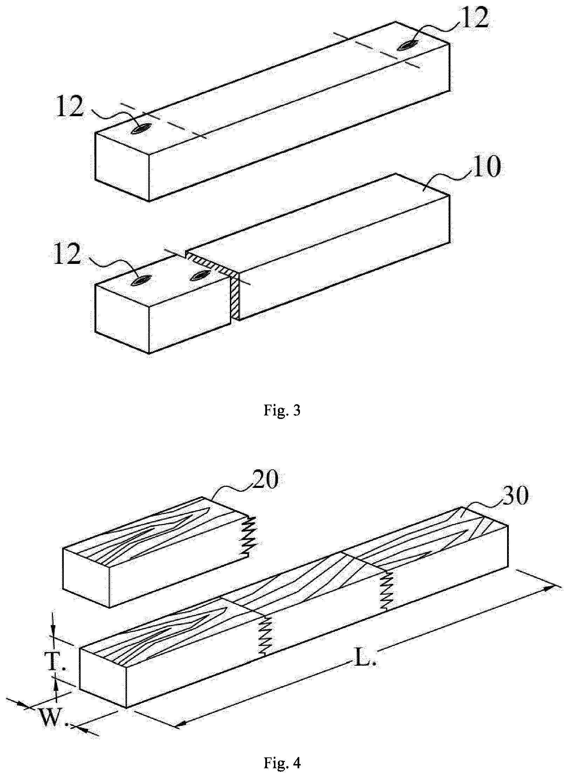

After planning the sawn timber, the teak scantling 10 with defects 12 as shown in Fig. 3 is acquired.

As used herein, the term "teak scantling" means a piece of teak with or without defects 12 whose cross-sectional dimensions exceed 5 cm but do not exceed 20 cm in both directions. Length, thickness and width of the teak scantling 10 with or without defects 12 is not less than 300 mm, 25-130 mm. and 25-130 mm, respectively.

To remove the defects 12 from the teak scantling 10, an automatic or semi-automatic defect removal or manual approach can be used. In automatic or semi-automatic approach, a machine with defect scanning capability can be programmed to rip out any defects such as knots/bee holes/cracks from the teak scantling 10. The typical manual approach includes checking for defects on the teak scantling 10; marking the defects with chalk and using a circular saw to rip out the defects from the teak scantling 10.

The teak scantling 10 without defect has a thickness between 25-130 mm, a width between 25-130 mm, and a length between 300-1000 mm.

As used herein, the term "finger joint" means a type of process for joining pieces of teak scantling 10 together to form a longer piece or large volume of a desired length. The pieces are cut at an angle, creating finger-like projections that interlock with each other. The finger-jointed teak scantlings 20 are then glued to create a solid, seamless lengthen strip 30 as shown in Fig. 4. This process allows for the efficient use of different lengths and enables the creation of longer, stronger and more stable options that can be used for a variety of applications. Both short lengths when finger jointing, resulting in many joints to make the full length and longer lengths resulting in fewer joints can be utilized depending on the final length produced.

The lengthen strip 30 of the present invention may has a thickness (T) between 25-130 mm, a width (W) between 25-130 mm, and a length (L) between 2000-6000 mm.

By gluing the finger-jointed teak scantlings 20 together, the adhesive used therein is selected from a group consisting of polyvinyl Acetate (PVA), polyurethane, cyanoacrylate (CA), Ethylene-Vinyl Acetate (EVA), urea-formaldehyde, hide glue, epoxy, melamine-based glue and a combination thereof. The adhesive used may be commercially available or freshly prepared according to the method well known to a person having ordinary skill in the art. For example, MF-3L/M-610LY from Hexion (Thailand) Co., Ltd. may be used in the gluing step.

As used herein, the term "laminating" means to unite layers of material e.g. layers of wood by an adhesive or other means.

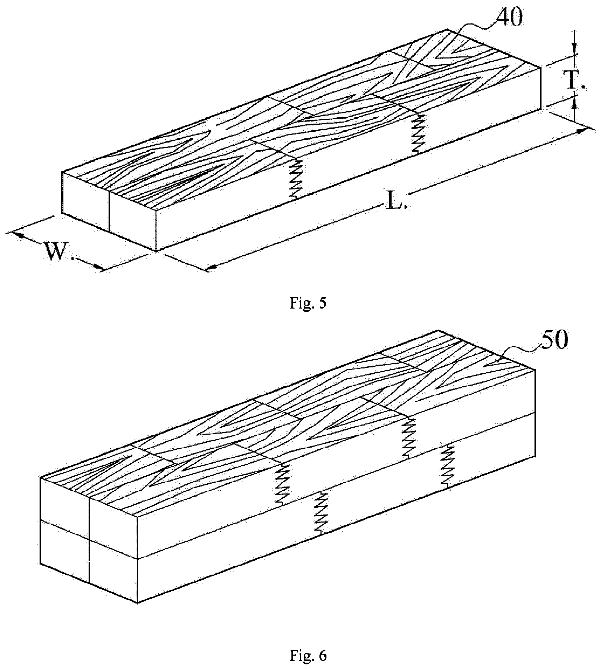

Figs. 5 illustrates the monolayer strip block 40 made by laminating the lengthen strips 30 laterally and Fig. 6 illustrates the multilayer strip block 50 made by laminating the monolayer strip blocks 40 vertically.

By laminating the lengthen strips 30 laterally or the monolayer strip blocks 40 vertically, the adhesive used therein is selected from a group consisting of polyvinyl Acetate (PVA), polyurethane, cyanoacrylate (CA), Ethylene-Vinyl Acetate (EVA), urea-formaldehyde, hide glue, epoxy, melamine-based glue and a combination thereof. The adhesive used may be commercially available or freshly prepared according to the method well known to a person having ordinary skill in the art. For example, MF-3L/M-610LY from Hexion (Thailand) Co., Ltd. may be used in the laminating step.

The monolayer strip block 40 of the present invention has a thickness (T) between 25-130 mm, a width (W) between 50-200 mm, and a length (L) between 2000-6000 mm.

The multilayer strip block 50 of the present invention has a thickness between 50-200 mm, a width between 50-200 mm, and a length between 2000-6000 mm.

Once the multilayer strip block 50 is form, it may be soften. Softening is done by submerging or steaming the multilayer strip block 50 into water at a certain temperature for a period of time. For example, the time for submerging the multilayer strip block 50 is between 48-72 hours under water at 60-100°C.

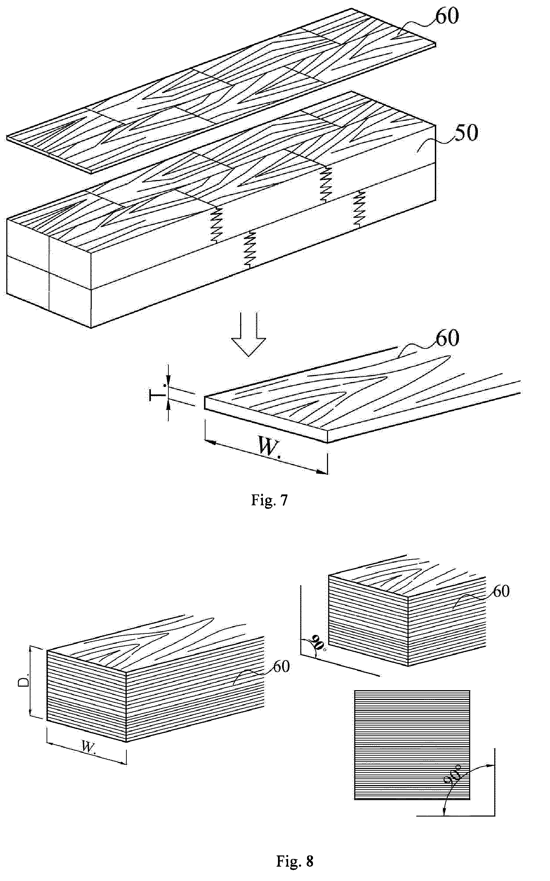

After softening the multilayer strip block 50, the top or bottom surface of the multilayer strip block 50 is then sliced to form the monolayer veneer 60 as shown in Fig. 7. The monolayer veneer 60 of the present invention has a thickness (T) between 0.5-2 mm, a width (W) between 50-200 mm, and a length between 2000-6000 mm.

As used herein, the term "veneer" means a thin or fine sheet of wood produced by rotary cutting, peeling, or slicing.

Figs. 8 illustrates the multilayer veneer block made by laminating the monolayer veneers 60 vertically.

By laminating the monolayer veneers 60 vertically, the adhesive used therein is selected from a group consisting of polyvinyl Acetate (PVA), polyurethane, cyanoacrylate (CA), Ethylene-Vinyl Acetate (EVA), urea-formaldehyde, hide glue, epoxy, melamine-based glue and a combination thereof. The adhesive used may be commercially available or freshly prepared according to the method well known to a person having ordinary skill in the art. For example, MF-3L/M-610LY from Hexion (Thailand) Co., Ltd. may be used in the laminating step.

The multilayer veneer block of the present invention has a thickness (D) between 3-300 mm, a width (W) between 50-200 mm, and a length between 2000-6000 mm.

The multilayer veneer block is then pressed (hot or cold press) together. Amount of the monolayer veneers 60 for forming the multilayer veneer block can vary depending on the final size. The multilayer veneer block may have 450 monolayer veneers 60 pressed together.

The curing time for lamination step will vary depending on the adhesive type and specification. The curing time could be from minutes to multiple hours.

The temperature for pressing the multilayer veneer block depends on whether using cold or hot (high frequency) press. The term "cold" means the ambient temperature. In general, cold pressing will require a longer duration than a hot press.

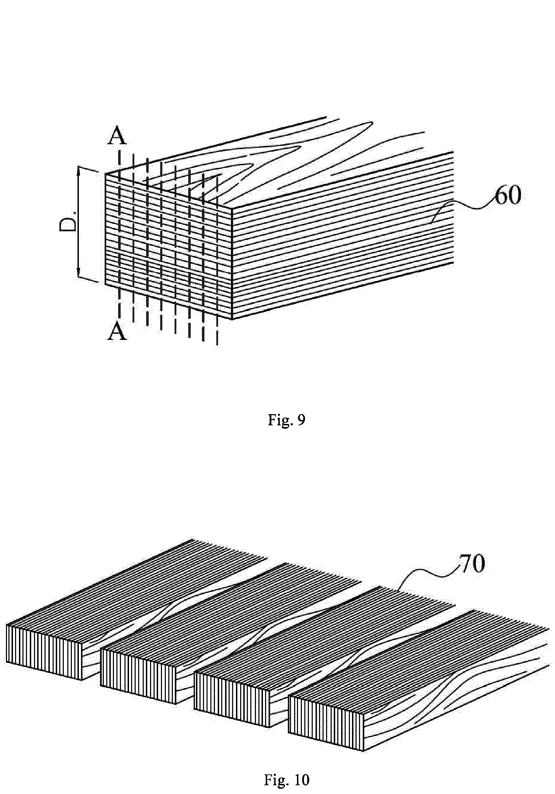

The multilayer veneer block could be left at the room temperature until it is cured completely. The multilayer veneer block is then ripped along ripping marks (A-A) as shown in fig. 9 to form the teak plank 70 of the present invention as shown in fig. 10.

As used herein, the term "ripping" is used to describe cutting the multilayer veneer block lengthwise. Ripping can be accomplished using a table saw, saw machine, circular saw, frame saw, band saw, or even a handsaw.

The teak plank 70 of the present invention has a thickness between 2-200 mm, a width between 30-300 mm, and a length between 2000-6000 mm.

Optionally, the method of making the teak plank as discussed above may comprise further planning the teak plank 70 to remove a small layer of the teak plank to ensure the finishing, smoothness and evenness of the teak plank (70). The planning may be done by a planning machine so the product appears "straight" when installed.

Before or after planning, the teak plank 70 may be exposed to sunlight for 24-48 hours to mature the color of the teak plank 70. The teak plank 70 with preferable quality should have a golden-brown appearance.

The method of making the teak plank 70 as discussed above may further comprising finishing steps to provide the teak plank 70 with scratch resistance, chemical resistance, moisture resistance, clarity, appearance, sheen, and reparability.

There are a variety of ways to finish teak plank and the decision rests on a combination of desired characteristics. Typically, there are two-step, three-step, and five-step finish processes to ensure the highest quality of the teak plank.

In an alternate aspect of the present invention, the method of making the teak plank as discussed above may further comprise finishing steps to provide the teak plank with scratch resistance, chemical resistance, moisture resistance, clarity, appearance, sheen, and reparability.

There have been a number of different ways teak decks have been finished. Starting with natural finishes such as beeswax or linseed oil, the teak plank industry's techniques have evolved to include a number of different catalyst, water-based, and urethane finish options. A catalyzed finish mixes a resin with a catalyst to create a reaction and this includes catalyzed lacquer, conversion varnish, urethanes, polyesters, and UV-cured processes. Water-based finishes and urethane or urethane/acrylic blends can be solvent-based or water-based.

Stain/toner includes semitransparent colors used to block out or reduce color variation. Wash coat includes seals in the base color of the stain, while still allowing the wiping glaze to seep into the pores without changing the background color. Wiping glaze is a pigmented oil applied to the teak plank that fills the pores to provide a subtle undertone that accents the grain. Seal is a protective layer of clear coating that locks in the colors and provides a smooth surface for the clear coat. A topcoat is a clear coat that provides protection and a finished appearance.

The finishing materials used in the finishing steps according to the present invention are selected from the group consisting of beeswax, linseed oil, catalyzed lacquer, conversion varnish, urethanes, polyesters, urethane/acrylic blends, stain/toner, wash coat, wiping glaze, seal, and topcoat.

Fig. 10 illustrates the teak plank 70 obtained from the method of the present invention. The resulting teak plank has a higher density than natural teak (about 650-900 kg/m3) has a compressive strength close to or higher than natural teak and has transverse coefficients of thermal expansion (CTE) less than 50 x 10-6/degree Celsius. This makes it well resistant to humidity and heat. The teak plank of the present invention is thus suitable for decking, and making decorative items and furniture.

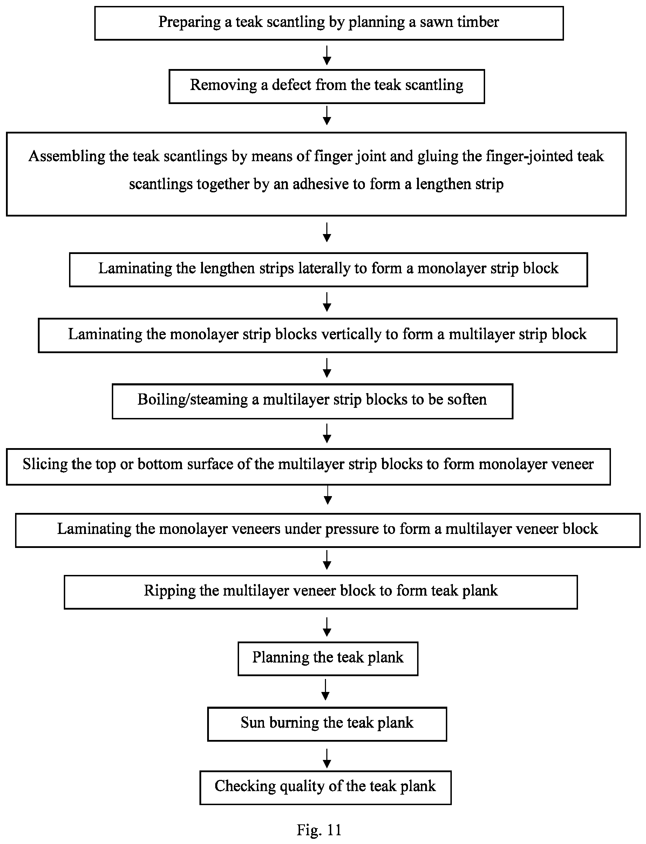

Fig. 11 illustrates the flow chart for the method of teak plank manufacture according to the specific embodiment of the present invention. The method comprises steps:
a. preparing a teak scantling 10 by planning a sawn timber;
b. removing a defect 12 from the teak scantling 10;
c. assembling the teak scantlings 10 without defect by means of finger joint and gluing the finger-jointed teak scantlings 20 together by an adhesive to form a lengthen strip 30;
d. laminating the lengthen strips 30 laterally to form a monolayer strip block 40;
e. laminating the monolayer strip blocks 40 vertically to form a multilayer strip block 50;
f. boiling/steaming the multilayer strip blocks 50 to be soften;
g. slicing a top or bottom surface of the multilayer strip block 50 to form a monolayer veneer 60;
h. laminating the monolayer veneers 60 vertically under pressure to form a multilayer veneer block;
i. ripping the multilayer veneer block lengthwise to form a teak plank 70;
j. planning the teak plank 70;
k. sun burning the teak plank 70; and
l. checking quality of the teak plank 70.

The teak plank 70 of the present invention is intended to be used outdoor, in the harshest condition. Therefore, the teak plank 70 should be able to withstand low/high temperatures, and sea water. Quality checking is to ensure the teak plank 70 does not have any defects. Quality checking may include detections of holes, incorrect moisture content and delamination.

The teak plank of the present invention has been tested to the JAS (Japanese Agricultural Standard) 1152 2007: Boiling water soak delamination test. It is standard testing for structural glued laminated timber. The test consists of cutting the specimen into 75 mm, weighing each specimen, soaking each specimen in boiling water for 4 hours then cooling it in water at 10-25 degrees Celsius for 1 hour, drying the specimen in an oven (with circulating air) at 70 ± 3 degrees Celsius until weight of the specimen is between 100 - 110% of the weight before soaking in boiling water. The test was performed in 2 cycles. Delamination must not exceed 3 mm in length and 0.05 mm in width. Also, the delamination ratio must be less than 5%. From the test result, no delamination of the teak deck of this invention was found.

In addition to the foregoing test, the dimensional stability, equilibrium moisture content (EMC), and density of the teak planks obtained from the traditional method and the method of the present invention were also tested. Results are shown in Tables 1-3. The test methods will be described hereinafter.

### • Dimensional stability

Determination of dimensional changes associated with changes in relative humidity was performed according to EN 318. This European Standard specifies a method for the determination of dimensional changes in wood-based panels, due to changes in the relative humidity of the air. The teak plank obtained from the traditional method (comparative sample) and the teak plank obtained from the method of the present invention (test sample) in the same size without finishing steps were used for dimensional change testing between 65%-85% relative humidity. The results of dimensional stability are shown in table 1.

**Table 1. The dimensional stability of the teak planks obtained from the traditional method and the method of the present invention**

| **Samples** | **Thickness change** | **Length change** |
|---|---|---|
| Comparative sample | 0.9% | 0.42 |
| Test sample | 0.5% | 0.38 |

The result in Table 1 shows that there are no significant changes in the thickness and length of both teak planks obtained from the traditional method and the present invention.

### • Equilibrium moisture content (EMC)

In this test, the static gravimetric method, which is based on the use of salt solution to maintain relative humidity was used. The mass transfers between the samples and ambient air are saturated by the natural diffusion of water vapor. The atmosphere surrounding the samples has a fixed air moisture content for the temperature applied to the salt solution. The samples were sealed up in small glass containers that contained 10% NaCl as the salt solution. The relative humidity of 65% and temperature of 70 °C were set for the test. Both comparative and test samples were tested for 4 cycles. Each cycle includes 3 days of drying the samples at 70 °C, 1 day of submerging the samples in 10% NaCl, 2 days of drying the samples at 70 °C, and 1 day of submerging the samples in 10% NaCl. The results of equilibrium moisture content (EMC) are shown in Table 2.

**Table 2. Equilibrium moisture content (EMC) of the teak planks obtained from the traditional method, and the method of the present invention**

| **Samples** | **Equilibrium Moisture content** |
|---|---|
| Comparative sample | 7.3 |
| Test sample | 7.4 |

This test measures the hygroscopicity of the samples which is the tendency for solid materials to absorb moisture from the surroundings. At 65% relative humidity, the teak plank obtained from the method of the present invention has shown near identical performance to the teak plank obtained from the traditional method.

### • Density

The process of measuring the density of the teak plank begins by embedding a steel ball that has a diameter of 11.28 millimeters (roughly 0.444 inches) halfway into the surface of the teak plank. The force required to push the ball into the teak plank indicates how dense and strong the teak plank is. Higher density indicates a greater strength.

**Table 3. The density of the teak planks obtained from the traditional method and the method of the present invention**

| **Samples** | Density (kg/m³) |
|---|---|
| Comparative sample | 631 |
| Test sample | 696 |

The result in Table 3 shows that the teak plank obtained from the method of the present invention has greater strength than the teak plank obtained from the traditional method.

In conclusion, the method of the present invention is faster teak plank manufacture than the traditional method. The method of the present invention can produce longer lengths of teak plank from the shorter teak logs. The teak planks obtained from the method of the present invention also have the same or even higher quality compared with one obtained from the traditional method.

## Claims

1. A method of making a teak plank (70), comprising steps:
∘ providing a plurality of teak scantlings (10) obtained from short-rotation teak logs;
∘ removing defects (12) from the teak scantlings (10);
∘ joining the defect-free scantlings (10) by finger-jointing and gluing to obtain lengthened strips (30);
∘ laminating the lengthened strips (30) laterally to form a monolayer strip block (40);
∘ laminating the monolayer strip blocks (40) vertically to obtain a multilayer strip block (50);
∘ slicing the softened multilayer strip block (50) to form monolayer veneers (60) of 0.5-2 mm thickness;
∘ laminating the monolayer veneers (60) vertically under heat and pressure to obtain a multilayer veneer block; and
∘ ripping the multilayer veneer block lengthwise to obtain a teak plank (70), **characterized by** boiling or steaming the multilayer strip block at 60-100 °C for 24-72 h to soften the fibers.

2. The method of making the teak plank of any one of claims 1, wherein the teak scantling (10) without defect has a thickness between 25-130 mm, a width between 25-130 mm, and a length between 300-1000 mm.

3. The method of making the teak plank of any one of claims 1, wherein the lengthen strip (30) has a thickness between 25-130 mm, a width between 25-130 mm, and a length between 2000-6000 mm.

4. The method of making the teak plank of any one of claims 1, wherein the monolayer strip block (40) has a thickness between 25-130 mm, a width between 50-200 mm, and a length between 2000-6000 mm.

5. The method of making the teak plank of any one of claims 1, wherein the multilayer strip block (50) has a thickness between 50-200 mm, a width between 50-200 mm, and a length between 2000-6000 mm.

6. The method of making the teak plank of any one of claims 1, wherein the monolayer veneer (60) has a thickness between 0.5-2.0 mm, a width between 50-200 mm, and a length between 2000-6000 mm.

7. The method of making the teak plank of any one of claims 1, wherein the multilayer veneer block has a thickness between 30-300 mm, a width between 50-200 mm, and a length between 2000-6000 mm.

8. The method of making the teak plank of any one of claims 1, wherein the teak plank (70) has a thickness between 2-200 mm, a width between 30-300 mm, and a length between 2000-6000 mm.

9. The method of making the teak plank of any one of claims 1, further comprising planning the teak planks (70) and/or sun burning the teak planks (70).

10. The method of making the teak plank of any one of claims 1, wherein the adhesive is selected from a group consisting of polyvinyl Acetate (PVA), polyurethane, cyanoacrylate (CA), Ethylene-Vinyl Acetate (EVA), urea-formaldehyde, hide glue, epoxy, melamine-based glue and a combination thereof.

11. The method of making the teak plank of any one of claims 1, wherein the adhesive is dyed adhesive.

12. The method of making the teak plank of any one of claims 1 or 9, further comprising finishing steps to provide the teak plank with scratch resistance, chemical resistance, moisture resistance, clarity, appearance, sheen, and reparability.

13. The method of making the teak plank of claim 12, wherein the finishing materials used in the finishing steps are selected from the group consisting of beeswax, linseed oil, catalyzed lacquer, conversion varnish, urethanes, polyesters, urethane/acrylic blends, stain/toner, wash coat, wiping glaze, seal, and topcoat.

14. A teak plank obtained from the method of any one of claims 1-13.

15. The teak plank of claim 14, wherein the teak plank has the transverse coefficients of thermal expansion (CTE) less than 50 x 10⁻⁶/degree Celsius.

16. The teak plank of claim 14 or 15, wherein the top surface of the teak plank has a straight grain pattern.

## Patentansprüche

1. Verfahren zur Herstellung einer Teakholzplanke (70), umfassend die folgenden Schritte:
∘ Bereitstellen einer Mehrzahl von Teakholz-Kanthölzern (10), die aus Teakholzstämmen mit kurzer Umtriebszeit gewonnen werden;
∘ Entfernen von Fehlstellen (12) aus den Teakholz-Kanthölzern (10);
∘ Verbinden der fehlerfreien Kanthölzer (10) durch Keilzinkenverbindung und Verkleben, um verlängerte Leisten (30) zu erhalten;
∘ seitliches Laminieren der verlängerten Leisten (30), um einen einschichtigen Leistenblock (40) zu bilden;
∘ vertikales Laminieren der einschichtigen Leistenblöcke (40), um einen mehrschichtigen Leistenblock (50) zu erhalten;
∘ Messern des erweichten mehrschichtigen Leistenblocks (50), um einschichtige Furniere (60) mit einer Dicke von 0,5-2 mm zu bilden;
∘ vertikales Laminieren der einschichtigen Furniere (60) unter Wärme und Druck, um einen mehrschichtigen Furnierblock zu erhalten; und
∘ Längsauftrennen des mehrschichtigen Furnierblocks, um eine Teakholzplanke (70) zu erhalten, **dadurch gekennzeichnet, dass** der mehrschichtige Leistenblock bei 60-100°C für 24-72 h gekocht oder gedämpft wird, um die Fasern zu erweichen.

2. Verfahren zur Herstellung der Teakholzplanke nach Anspruch 1, wobei das fehlerfreie Teakholz-Kantholz (10) eine Dicke zwischen 25-130 mm, eine Breite zwischen 25-130 mm und eine Länge zwischen 300-1000 mm aufweist.

3. Verfahren zur Herstellung der Teakholzplanke nach Anspruch 1, wobei die verlängerte Leiste (30) eine Dicke zwischen 25-130 mm, eine Breite zwischen 25-130 mm und eine Länge zwischen 2000-6000 mm aufweist.

4. Verfahren zur Herstellung der Teakholzplanke nach Anspruch 1, wobei der einschichtige Leistenblock (40) eine Dicke zwischen 25-130 mm, eine Breite zwischen 50-200 mm und eine Länge zwischen 2000-6000 mm aufweist.

5. Verfahren zur Herstellung der Teakholzplanke nach Anspruch 1, wobei der mehrschichtige Leistenblock (50) eine Dicke zwischen 50-200 mm, eine Breite zwischen 50-200 mm und eine Länge zwischen 2000-6000 mm aufweist.

6. Verfahren zur Herstellung der Teakholzplanke nach Anspruch 1, wobei das einschichtige Furnier (60) eine Dicke zwischen 0,5-2,0 mm, eine Breite zwischen 50-200 mm und eine Länge zwischen 2000-6000 mm aufweist.

7. Verfahren zur Herstellung der Teakholzplanke nach Anspruch 1, wobei der mehrschichtige Furnierblock eine Dicke zwischen 30-300 mm, eine Breite zwischen 50-200 mm und eine Länge zwischen 2000-6000 mm aufweist.

8. Verfahren zur Herstellung der Teakholzplanke nach Anspruch 1, wobei die Teakholzplanke (70) eine Dicke zwischen 2-200 mm, eine Breite zwischen 30-300 mm und eine Länge zwischen 2000-6000 mm aufweist.

9. Verfahren zur Herstellung der Teakholzplanke nach Anspruch 1, ferner umfassend das Hobeln der Teakholzplanken (70) und/oder das Sonnenbrennen der Teakholzplanken (70).

10. Verfahren zur Herstellung der Teakholzplanke nach Anspruch 1, wobei der Klebstoff aus einer Gruppe ausgewählt ist, die aus Polyvinylacetat (PVA), Polyurethan, Cyanacrylat (CA), Ethylen-Vinylacetat (EVA), Harnstoff-Formaldehyd, Hautleim, Epoxidharz, Klebstoff auf Melaminbasis und einer Kombination davon besteht.

11. Verfahren zur Herstellung der Teakholzplanke nach Anspruch 1, wobei der Klebstoff ein gefärbter Klebstoff ist.

12. Verfahren zur Herstellung der Teakholzplanke nach Anspruch 1 oder 9, ferner umfassend Endbearbeitungsschritte, um der Teakholzplanke Kratzfestigkeit, Chemikalienbeständigkeit, Feuchtigkeitsbeständigkeit, Klarheit, Erscheinungsbild, Glanz und Reparierbarkeit zu verleihen.

13. Verfahren zur Herstellung der Teakholzplanke nach Anspruch 12, wobei die bei den Endbearbeitungsschritten verwendeten Endbearbeitungsmaterialien aus einer Gruppe ausgewählt sind, die aus Bienenwachs, Leinöl, katalysiertem Lack, Konversionslack, Urethanen, Polyestern, Urethan/Acryl-Mischungen, Beize/Toner, Washcoat, Wischlasur, Versiegelungsmittel und Topcoat besteht.

14. Teakholzplanke, die nach dem Verfahren nach einem der Ansprüche 1 bis 13 erhalten wird.

15. Teakholzplanke nach Anspruch 14, wobei die Teakholzplanke transversale Wärmeausdehnungskoeffizienten (CTE) von weniger als 50 x 10⁻⁶ pro Grad Celsius aufweist.

16. Teakholzplanke nach Anspruch 14 oder 15, wobei die obere Oberfläche der Teakholzplanke einen geraden Faserverlauf aufweist.

## Revendications

1. Une méthode de fabrication d'une planche de teck (70), comprenant les étapes suivantes :
∘ la fourniture d'une pluralité d'équarris de teck (10) obtenus à partir de grumes de teck à courte rotation ;
∘ l'élimination des défauts (12) des équarris de teck (10) ;
∘ l'assemblage des équarris (10) sans défaut par enture à doigts et collage afin d'obtenir des bandes allongées (30) ;
∘ le laminage latéral des bandes allongées (30) pour former un bloc de bandes monocouches (40) ;
∘ le laminage vertical des blocs de bandes monocouches (40) afin d'obtenir un bloc de bandes multicouches (50) ;
∘ le tranchage du bloc de bandes multicouches (50) ramolli pour former des placages monocouches (60) d'une épaisseur de 0,5-2 mm ;
∘ le laminage vertical des placages monocouches (60) sous chaleur et pression afin d'obtenir un bloc de placages multicouches ; et
∘ le sciage longitudinal du bloc de placages multicouches afin d'obtenir une planche de teck (70), **caractérisée par** le fait de faire bouillir ou d'étuver le bloc de bandes multicouches à 60-100 °C pendant 24-72 h afin de ramollir les fibres.

2. La méthode de fabrication de la planche de teck selon l'une quelconque des revendications 1, dans laquelle l'équarri de teck (10) sans défaut a une épaisseur comprise entre 25-130 mm, une largeur comprise entre 25-130 mm et une longueur comprise entre 300-1000 mm.

3. La méthode de fabrication de la planche de teck selon l'une quelconque des revendications 1, dans laquelle la bande allongée (30) a une épaisseur comprise entre 25-130 mm, une largeur comprise entre 25-130 mm et une longueur comprise entre 2000-6000 mm.

4. La méthode de fabrication de la planche de teck selon l'une quelconque des revendications 1, dans laquelle le bloc de bandes monocouches (40) a une épaisseur comprise entre 25-130 mm, une largeur comprise entre 50-200 mm et une longueur comprise entre 2000-6000 mm.

5. La méthode de fabrication de la planche de teck selon l'une quelconque des revendications 1, dans laquelle le bloc de bandes multicouches (50) a une épaisseur comprise entre 50-200 mm, une largeur comprise entre 50-200 mm et une longueur comprise entre 2000-6000 mm.

6. La méthode de fabrication de la planche de teck selon l'une quelconque des revendications 1, dans laquelle le placage monocouche (60) a une épaisseur comprise entre 0,5-2,0 mm, une largeur comprise entre 50-200 mm et une longueur comprise entre 2000-6000 mm.

7. La méthode de fabrication de la planche de teck selon l'une quelconque des revendications 1, dans laquelle le bloc de placages multicouches a une épaisseur comprise entre 30-300 mm, une largeur comprise entre 50-200 mm et une longueur comprise entre 2000-6000 mm.

8. La méthode de fabrication de la planche de teck selon l'une quelconque des revendications 1, dans laquelle la planche de teck (70) a une épaisseur comprise entre 2-200 mm, une largeur comprise entre 30-300 mm et une longueur comprise entre 2000-6000 mm.

9. La méthode de fabrication de la planche de teck selon l'une quelconque des revendications 1, comprenant en outre le rabotage des planches de teck (70) et/ou le brûlage au soleil des planches de teck (70).

10. La méthode de fabrication de la planche de teck selon l'une quelconque des revendications 1, dans laquelle l'adhésif est choisi parmi le groupe constitué de l'Acétate de polyvinyle (PVA), du polyuréthane, du cyanoacrylate (CA), de l'Éthylène-Acétate de Vinyle (EVA), de l'urée-formaldéhyde, de la colle de peau, de l'époxy, de la colle à base de mélamine et d'une combinaison de ceux-ci.

11. La méthode de fabrication de la planche de teck selon l'une quelconque des revendications 1, dans laquelle l'adhésif est un adhésif teinté.

12. La méthode de fabrication de la planche de teck selon l'une quelconque des revendications 1 ou 9, comprenant en outre des étapes de finition pour conférer à la planche de teck une résistance aux rayures, une résistance aux produits chimiques, une résistance à l'humidité, une clarté, un aspect, un brillant et une réparabilité.

13. La méthode de fabrication de la planche de teck selon la revendication 12, dans laquelle les matériaux de finition utilisés dans les étapes de finition sont choisis parmi le groupe constitué de cire d'abeille, d'huile de lin, de laque catalysée, de vernis de conversion, d'uréthanes, de polyesters, de mélanges uréthane/acrylique, de teinture/toner, de couche de lavage, de glacis d'essuyage, de scellant et de couche de finition.

14. Une planche de teck obtenue par la méthode selon l'une quelconque des revendications 1-13.

15. La planche de teck selon la revendication 14, dans laquelle la planche de teck présente les coefficients de dilatation thermique transversales (CTE) inférieurs à 50 x 10⁻⁶/degré Celsius.

16. La planche de teck selon la revendication 14 ou 15, dans laquelle la surface supérieure de la planche de teck présente un motif de grain droit.
